# EUROPÄISCHE PATENTSCHRIFT

(11) **EP 3 910 044 B1**
(45) Veröffentlichungstag und Bekanntmachung des Hinweises auf die Patenterteilung: **06.03.2024**
(21) Anmeldenummer: 21173029.6
(22) Anmeldetag: 10.05.2021
(51) Int. Cl.: C09K 5/20, C23F 11/10

(54) **FROSTSCHUTZMITTEL**
ANTI-FREEZE AGENT
AGENT ANTIGEL

(30) Priorität: 11.05.2020 DE 102020112674
(43) Veröffentlichungstag der Anmeldung: 17.11.2021
(73) Patentinhaber: Aqua-Concept Gesellschaft für Wasserbehandlung mbH, 82166 Gräfelfing (DE)
(72) Erfinder: PORADA, Thomas, 06484 Quedlinburg (DE); DETIG, Andreas, 82166 Gräfelfing (DE); KLUKAS, Ronald, 85247 Schwabhausen (DE)
(74) Vertreter: Hoefer & Partner Patentanwälte mbB

(56) Entgegenhaltungen:
- WO-A1-2019/201363
- DE-U1-202016 000 330
- US-A- 4 450 088

## Beschreibung

Die Erfindung betrifft ein Frostschutzmittel, dessen den Frostschutz bewirkende Rohstoffe insbesondere bioverfügbare bzw. nachwachsende Rohstoffe sind.

Alkohole sind als gute Frostschutzmittel, also den Frostschutz verbessernde und damit den Gefrierpunkt senkende Mittel bekannt. Die wenigstens Alkohole sind jedoch bioverfügbare bzw. nachwachsende Rohstoffe. Ethanol ist ein bioverfügbarer Alkohol, dessen Frostschutzwirkung jedoch für die meisten Einsatzbereiche nicht ausreichend ist, oder der in hohen Konzentrationen von über 20 Masse% eingesetzt zu Verarbeitungs- und Anwendungsproblemen führt. Aus den vergangenen "Weinpanschskandalen" ist die Kombination von Ethanol mit dem Frostschutzmittel Diethylenglycol bekannt. Nachteilig an dieser alkoholischen Mischung ist, dass wenn man einen deutlichen Frostschutz von um -20 bis -45 °C erzielen will, hohe Mengen an Diethylenglycol notwendig werden, was die Viskosität des Frostschutzmittels ansteigen lassen kann. Eine hohe Viskosität ist aber aufgrund schwierigerer Verarbeitung und Dosierung des Frostschutzmittels nachteilig. Zudem ist Diethylenglycol nicht bioverfügbar. Eine gute Bioverfügbarkeit ist wichtig für die Marktakzeptanz und die Nachhaltigkeit des Frostschutzmittels, wobei unter Bioverfügbarkeit eines Rohstoffs verstanden wird, dass dieser Rohstoff im Wesentlichen aus nachwachsenden Rohstoffquellen gewonnen und allenfalls durch Aufreinigung, nicht aber durch Syntheseverfahren hergestellt wird.

WO 2019/201363 A1 betrifft ein Frostschutzmittel, das mindestens eine Base, 5 bis 22 Masse-% Bernsteinsäure und 3 bis 60 Masse-% Ethanol, jeweils bezogen auf die Gesamtmasse des Frostschutzmittels enthält, wobei die Gesamtmasse an Acetat und Essigsäure im Frostschutzmittel weniger als 0,1 Masse-%, bezogen auf die Gesamtmasse des Frostschutzmittels beträgt.

DE 20 2016 000330 U1 lehrt ein Korrosionsschutzmittel, das 1,60 bis 4,20 Gew.-% mindestens einer Base, 0,26 bis 0,70 Gew.-% mindestens einer ersten Dicarbonsäure mit zwei bis sechs Kohlenstoffatomen, 0,26 bis 0,70 Gew.-% mindestens einer zweiten Dicarbonsäure mit zwei bis sechs Kohlenstoffatomen, 0,26 bis 0,70 Gew.-% mindestens einer aromatischen Carbonsäure mit einem Phenylrest und mindestens einer Carboxylgruppe, 0,02 bis 0,50 Gew.-% mindestens eines Diazols und/oder eines Triazols und mindestens einen Alkohol, ausgewählt aus der Gruppe bestehend aus: Monoethylenglykol, Monopropylenglykol, Dipropylenglykol, Triethylenglykol, 1,3-Propandiol und Ethanol, enthält.

Es ist Aufgabe der Erfindung ein Frostschutzmittel mit sehr guter Frostschutzwirkung unter Verwendung von bioverfügbaren bzw. nachwachsenden Rohstoffen bereitzustellen, das sich durch eine niedrige Viskosität und damit sehr gute Verarbeitbarkeit, Anwendung und Nachhaltigkeit auszeichnet.

Die Lösung dieser Aufgabe erfolgt durch die Merkmale des unabhängigen Anspruchs 1. Die Unteransprüche haben vorteilhafte Weiterbildungen zum Inhalt.

Demnach wird die Aufgabe durch ein Frostschutzmittel gelöst, das Propan-1,3-diol, Ethanol und Wasser enthält. Bei allen drei Rohstoffen handelt es sich um bioverfügbare bzw. nachwachsende Rohstoffe. Das Ethanol wird dabei vorzugsweise in vergällter Form eingesetzt und enthält in etwa 96 Masse% Ethanol, wobei als Vergällungsmittel insbesondere Methylethylketon oder Denatriumbenzoat zur Anwendung kommt. Sofern Isopropylalkohol (Isopropanol) als Vergällungsmittel eingesetzt wird, liegt dessen Menge bei weniger als 2 Masse% bezogen auf die Gesamtmasse an Propan-1,3-diol. Vorzugsweise enthält das Vergällungsmittel keinen Isopropylalkohol.

Das Masseverhältnis von Propan-1,3-diol : Ethanol : Wasser beträgt 35-45 : 12-16 : 40-50, wodurch sich ein sehr guter Frostschutz von mindestens -20 °C bis -50 °C einstellen lässt. Zudem zeichnet sich das Frostschutzmittel durch eine niedrige kinematische Viskosität von etwa 5 mm²/s bis 7 mm²/s, gemessen bei 20 °C und etwa 45 mm²/s bis 70 mm²/s, gemessen bei -20 °C aus. Als Messverfahren wurde ein Verfahren gemäß DIN 53018 verwendet. Das erfindungsgemäße Frostschutzmittel weist damit ein hervorragendes anwendungstechnisches und rohstoffbasiertes Eigenschaftsprofil aus und zeichnet sich durch eine hervorragende Bioverfügbarkeit aus. Seine den Frostschutz verbessernden Rohstoffe werden aus nachwachsenden Rohstoffquellen bezogen, so dass die Nachhaltigkeit des Frostschutzmittels besonders hoch ist. Hinsichtlich des anwendungsbezogenen Eigenschaftsprofils ist Insbesondere eine sehr niedrige Viskosität bei sehr niedrigen Temperaturen zu nennen, so dass das Frostschutzmittel sehr gut verarbeitbar und einsetzbar bzw. anwendbar ist.

Der Frostschutz des erfindungsgemäßen Frostschutzmittels lässt sich noch gezielter auf niedrige Werte von insbesondere mindestens -30 °C einstellen, wenn das Masseverhältnis Propan-1,3-diol : Ethanol : Wasser 38-42 : 14-16 : 43-46 beträgt.

Gemäß einer weiteren vorteilhaften Weiterbildung enthält das Frostschutzmittel außer Ethanol und Propan-1,3-diol keine weiteren Alkohole und insbesondere kein Monopropylenglycol (Propan-1,2-diol), Diethylenglycol, Dipropylenglycol, Butandiole, Methanol, Isopropylalkohol und Glycerin. Die vorstehend genannten Alkohole haben insbesondere den Nachteil, dass sie nicht bioverfügbar bzw. keine nachwachsenden Rohstoffe sind. Sofern der eine oder andere Alkohol bioverfügbar ist bzw. ein nachwachsender Rohstoff ist, erzielt er jedoch nicht die erfindungsgemäße Frostschutzwirkung und/oder erhöht die Viskosität des Frostschutzmittels deutlich.

Weiter vorteilhaft sind Ethanol und Propan-1,3-diol die einzigen den Frostschutz verbessernden und damit den Gefrierpunkt senkenden Mittel im erfindungsgemäßen Frostschutzmittel, so dass der Anteil an bioverfügbaren bzw. auch nachwachsenden Rohstoffen besonders hoch ist. Die Umweltverträglichkeit des Frostschutzmittels sowie seine Markakzeptanz sind damit sehr gut.

Zur Regulierung des pH-Werts, und um hierdurch ggf. auch den Korrosionsschutz des Frostschutzmittels zu verbessern, ist weiter vorteilhaft vorgesehen, dass das Frostschutzmittel ferner mindestens eine Base enthält. Die Base ist dabei aufgrund der sehr guten Verfügbarkeit und Anwendungseigenschaften insbesondere ausgewählt aus NaOH, KOH und Aminoalkoholen, wobei als Aminoalkohol insbesondere Triethanolamin zur Anwendung kommt. NaOH und KOH werden vorzugsweise als wässrige Lösung eingesetzt, insbesondere als 50 Masse%ige wässrige Lösungen. Hierdurch wird die Ätzwirkung deutlich gesenkt und die Anwendung insbesondere bei der Herstellung wird erleichtert.

Eine weitere vorteilhafte Weiterbildung sieht vor, dass das Frostschutzmittel ferner mindestens eine Dicarbonsäure enthält. Dicarbonsäuren, und hierunter insbesondere insbesondere Dodekandisäure, Undekandisäure, Adipinsäure, Bersteinsäure und Sebacinsäure, haben sich als sehr wirkungsvolle multifunktionale Korrosionsinhibitoren herausgestellt. Aufgrund der besonders hohen Korrosionsschutzwirkung bei gleichzeitig hoher Verfügbarkeit und sehr guter Verarbeitbarkeit, ist Sebacinsäure unter den Dicarbonsäuren besonders bevorzugt.

Weiter vorteilhaft enthält das Frostschutzmittel als weiteres Korrosionsschutzmittel mindestens eine Monocarbonsäure. Geeignete Monocarbonsäuren umfassen Octansäure, Benzoesäure, para-tert.-Butylbenzoesäure, Laurinsäure und Myristinsäure. Octansäure ist eine relativ kurzkettige Monocarbonsäure mit sehr guter multifunktionaler Korrosionsschutzwirkung, die sich gut in das Frostschutzmittel einarbeiten lässt.

Zur Erzielung eines besonders hohen Korrosionsschutzes enthält das Frostschutzmittel vorzugsweise Sebacinsäure und Octansäure in Kombination.

Ferner vorteilhaft enthält das Frostschutzmittel mindestens ein Korrosionsschutzmittel, das insbesondere zur Verbesserung des Korrosionsschutzes von Buntmetallen vorteilhaft ist. Besonders geeignet sind hierunter Thiazole und/oder Triazole, die jeweils einzeln oder aber in Kombinationen eingesetzt werden können. Benzotriazol ist hierunter besonders bevorzugt.

Zur Verbesserung der Herstellung und auch der Anwendung des Frostschutzmittels, enthält das Frostschutzmittel vorzugsweise mindestens ein Entschäumungsmittel. Hierunter bevorzugt sind silikonfreie difunktionelle Ethylenoxid-Propylenoxid basierte nicht ionische Blockcopolymere mit endständigen primären Alkoholgruppen mit einer mittleren Molmasse von ca. 2000 g/mol, silikonfreie Ethylenoxid-Propylenoxid-Ethylenoxid basierte nicht ionische Blockcopolymer mit einer endständigen primären Alkoholgruppe mit einer mittleren Molmasse des Propylenoxid-Blocks von ca. 800 - 3250 g/mol, Silikon-Polyoxyalkylenkombinierte, kammförmige polyethermodifizierte hydrolysestabile Polydimethylsiloxane und insbesondere Propylenoxid (PO)/Ethylenoxid (EO)-Blockpolymer-basierte Entschäumungsmittel, die unter dem Handelsnamen "Pluronic" vertrieben werden.

Zur Verbesserung der Hartwasserstabilität enthält das Frostschutzmittel weiter vorteilhaft mindestens einen Hartwasserstabilisator und hierunter, aufgrund seiner sehr guten anwendungstechnischen und verarbeitungstechnischen Eigenschaften, insbesondere Acrylsäure-Sulfonsäure nichtionische, nicht neutralisierte Terpolymere mit einer mittleren Molmasse von ca, 4500 g/mol, Maleinsäure-basierte nicht neutralisierte Homopolymere mit einer mittleren Molmasse von ca. 500 - 1000 g/mol, 2-Acrylamido-2-Methyl-1-Propansulfonsäure, Phosphinsäure-basierte Natrium-neutralisierte Copolymere mit einer mittleren Molmasse von ca, > 4000 g/mol, Acrylsäure-basierte teilweise Natrium-neutralisierte Homopolymere mit einer mittleren Molmasse von ca, 2100 g/mol oder insbesondere ein acrylatbasiertes Terpolymer. Unter Hartwasserstabilisatoren werden im Sinne der vorliegenden Erfindung hochmolekulare organische Substanzen verstanden, welche in der Lage sind, durch ihre unterstöchiometrische Adsorption an vorhandene Kalk-Mikrokristallite diese am weiteren Wachstum zu hindern.

Um einen besonders hohen Frostschutz bei gleichzeitig sehr guter Korrosionsschutzwirkung, hoher Umweltverträglichkeit und Anwenderfreundlichkeit zu erzielen, enthält das Frostschutzmittel die nachstehenden Rohstoffe in Kombination: Propan-1,3-diol, Ethanol, Wasser, NaOH, Triethanolamin, Sebacinsäure, Octansäure, mindestens ein Triazol, ein Entschäumungsmittel und einen Hartwasserstabilisator, wobei Propan-1,3-diol, Ethanol und Wasser mit dem vorstehend definierten Masseverhältnis enthalten sind.

Dieselben vorteilhaften Effekte werden auch für ein Frostschutzmittel erzielt, das Propan-1,3-diol, Ethanol, Wasser, 2-Diethylaminoethanol und eine nichtproteinogene Aminosäure enthält. Das Masseverhältnis von Propan-1,3-diol zu Ethanol zu Wasser beträgt wiederum 35-45 : 12-16 : 40-50. Dieses Frostschutzmittel hat zu dem vorstehenden Frostschutzmittel den Vorteil, dass es eine geringere Anzahl an Rohstoffen aufweist, dadurch einfacher herstellbar und dennoch hoch funktional ist.

Aus Gründen einer sehr guten Korrosionsschutzwirkung, hohen Umweltverträglichkeit und Anwenderfreundlichkeit bei sehr gutem Frostschutz, besteht das Frostschutzmittel besonders vorteilhaft aus folgenden Rohstoffen: Propan-1,3-diol, Ethanol, Wasser, NaOH, Triethanolamin, Sebacinsäure, Octansäure, Benzotriazol, einem Propylenoxid/Ethylenoxid-Blockpolymer-basierten Entschäumungsmittel und einem acrylatbasierten Terpolymer, wobei Propan-1,3-diol, Ethanol und Wasser wiederum mit dem vorstehend definierten Masseverhältnis enthalten sind.

Ebenfalls vorteilhaft wird ein Frostschutzmittel beschrieben, das aus Propan-1,3-diol, Ethanol, Wasser, 2-Diethylaminoethanol und einer nichtproteinogenen Aminosäure besteht. Das Masseverhältnis von Propan-1,3-diol zu Ethanol zu Wasser beträgt wiederum 35-45 : 12-16 : 40-50. Das Frostschutzmittel weist einen sehr guten Frostschutz und darüber hinaus eine niedrige Viskosität bei niedrigen Temperaturen auf, so dass die Verarbeitbarkeit und Anwendung besonders einfach sind. Zudem enthält das Frostschutzmittel ausschließlich nachwachsende und/oder bioverfügbare Rohstoffe.

### Beispiele

Aus den in Tabelle 1 gelisteten Rohstoffen wurden durch Vermengen dieser Rohstoffe durch Rühren Frostschutzmittel 1 bis 3 hergestellt. Ebenfalls gelistet sind der gemessene pH-Wert, die Leitfähigkeit, der Korrosionsschutz und der gemessene Gefrierpunkt. Die Leitfähigkeit wurde dabei gemäß DIN EN 27888:1993-11 und der Frostschutz gemäß ASTM D 1177:2017 gemessen.

| | Frostschutzmittel 1 | Frostschutzmittel 2 | Frostschutzmittel 3 |
|---|---|---|---|
| Rohstoff | Menge in Masse% | Menge in Masse% | Menge in Masse% |
| Ethanol (96 Masse%) | 15,0 | 15,0 | 15,00 |
| Propan-1,3-diol | 45,7 | 45,7 | 44,10 |
| Triethanolamin (85 Masse% in Wasser) | 0 | 0,24 | 0,24 |
| NaOH (50 Masse% in Wasser) | 0 | 0,064 | 0,064 |
| Sebacinsäure | 0 | 0,075 | 0,075 |
| Octansäure | 0 | 0,0535 | 0,0535 |
| Benzotriazol | 0 | 0,008 | 0,008 |
| acrylatbasiertes Terpolymer* | 0 | 0,007 | 0,007 |
| EO/PO-Blockpolymer** | 0 | 0,0005 | 0,0005 |
| Wasser | Rest auf 100 Masse% | Rest auf 100 Masse% | Rest auf 100 Masse% |
| Korrosionsschutz | ok | sehr gut | sehr gut |
| Leitfähigkeit [µS/cm] | 0,9 | 144,4 | 184,6 |
| pH | 6,75 | 8,09 | 8,10 |
| Gefrierpunkt [°C] | -47,3 | -46,6 | -45,8 |

Alle drei Frostschutzmittel zeichneten sich durch eine sehr hohe Frostschutzwirkung aus. Frostschutzmittel 2 und 3 wiesen darüber hinaus gegenüber Frostschutzmittel 1 noch einen verbesserten Korrosionsschutz auf. Alle drei Frostschutzmittel weisen einen besonders hohen Anteil an nachwachsenden, bioverfügbaren Rohstoffen auf und lassen sich aufgrund der niedrigen Viskosität bei niedrigen Temperaturen um den Gefrierpunkt sehr gut verarbeiten.

Weitere Einzelheiten, Vorteile und Merkmale der vorliegenden Erfindung ergeben sich aus nachfolgender Beschreibung von Ausführungsbeispielen anhand der Zeichnung. Es zeigt:

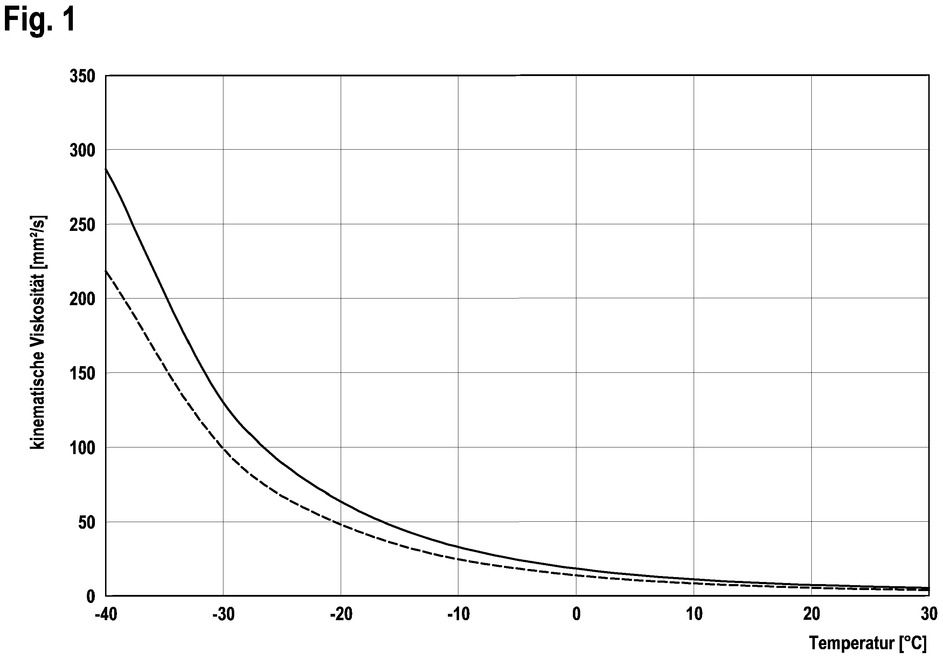

- Fig. 1: Viskositätskurven.

Figur 1 zeigt im Detail zwei Viskositätskurven. Die obere Kurve zeigt die Temperaturabhängigkeit der kinematischen Viskosität (gemessen gemäß DIN 53018) einer wässrigen Lösung des erfindungsgemäß verwendeten Propan-1,3-diols, die auf einen Frostschutz von -40 °C eingestellt war. Die untere Kurve zeigt die Temperaturabhängigkeit der kinematischen Viskosität (gemessen gemäß DIN 53018) einer wässrigen ethanolischen Lösung mit Propan-1,3-diol, die ebenfalls auf einen Frostschutz von -40 °C eingestellt war, wobei das Masseverhältnis Propan-1,3-diol : Ethanol : Wasser 35-45 : 12-16 : 40-50 betrug. Zu erkennen ist, dass die Viskosität mit sinkender Temperatur zunimmt. Dieser Anstieg ist jedoch für die ethanolhaltige Propan-1,3-diollösung wesentlich geringer. Bei -40 °C wird für die wässrige Propan-1,3-diollösung (obere Kurve) ein Viskositätswert von etwa 290 mm²/s erhalten, während für die Lösung aus Ethanol, Propan-1,3-diol und Wasser bei selbem Frostschutzwert, eine Viskosität von nur etwa 220 mm²/s erhalten wurde. Die erfindungsgemäße Zubereitung aus Wasser, Ethanol und Propan-1,3-diol war damit wesentlich einfacher zu verarbeiten und bei der Anwendung zu handhaben.

Dieselben Viskositätsverhältnisse spiegelten sich auch in den Frostschutzmitteln 1 bis 3 wider. Durch den Zusatz von Propan-1,3-diol zu einer wässrigen Ethanollösung konnten sehr niedrige Viskositätswerte im Frostschutzbereich von -20 °C bis -40 °C erzielt werden.

Neben der vorstehenden schriftlichen Beschreibung der Erfindung wird zu deren ergänzender Offenbarung hiermit explizit auf die zeichnerische Darstellung der Erfindung in Fig. 1 Bezug genommen.

## Patentansprüche

1. Frostschutzmittel enthaltend Propan-1,3-diol, Ethanol und Wasser, wobei das Masseverhältnis Propan-1,3-diol : Ethanol: Wasser 35-45 : 12-16 : 40-50 beträgt.

2. Frostschutzmittel nach Anspruch 1, wobei das Masseverhältnis Propan-1,3-diol : Ethanol : Wasser 38-42 : 14-16 : 43-46 beträgt.

3. Frostschutzmittel nach Anspruch 1 oder 2, das außer Ethanol und Propan-1,3-diol keine weiteren Alkohole enthält.

4. Frostschutzmittel nach einem der vorhergehenden Ansprüche, ferner enthaltend mindestens eine Base, insbesondere ausgewählt aus NaOH, KOH und Aminoalkoholen und/oder ferner enthaltend mindestens eine Dicarbonsäure, insbesondere Dodekandisäure, Undekandisäure, Adipinsäure, Bernsteinsäure oder Sebacinsäure und/oder ferner enthaltend mindestens eine Monocarbonsäure, insbesondere Octansäure, Benzoesäure, para-tert. Butylbenzoesäure, Laurinsäure und Myristinsäure und/oder ferner enthaltend mindestens ein Korrosionsschutzmittel, insbesondere mindestens ein Thiazol und/oder mindestens ein Triazol.

5. Frostschutzmittel nach einem der vorhergehenden Ansprüche, ferner enthaltend mindestens ein Entschäumungsmittel.

6. Frostschutzmittel nach einem der vorhergehenden Ansprüche, ferner enthaltend mindestens einen Hartwasserstabilisator, insbesondere ein acrylatbasiertes Terpolymer.

7. Frostschutzmittel nach einem der vorhergehenden Ansprüche enthaltend:
Propan-1,3-diol, Ethanol, Wasser, NaOH, Triethanolamin, Sebacinsäure, Octansäure, mindestens ein Triazol, ein Entschäumungsmittel und einen Hartwasserstabilisator.

8. Frostschutzmittel nach einem der Ansprüche 1 bis 6 enthaltend:
Propan-1,3-diol, Ethanol, Wasser, 2-Diethylaminoethanol und eine nichtproteinogene Aminosäure.

9. Frostschutzmittel nach Anspruch 1 bestehend aus:
Propan-1,3-diol, Ethanol, Wasser, NaOH, Triethanolamin, Sebacinsäure, Octansäure, Benzotriazol, einem Propylenoxid/Ethylenoxid-Blockpolymer-basierten Entschäumungsmittel und einem acrylatbasierten Terpolymer.

10. Frostschutzmittel nach Anspruch 1 bestehend aus: Propan-1,3-diol, Ethanol, Wasser, 2-Diethylaminoethanol und einer nichtproteinogenen Aminosäure.

## Claims

1. An anti-freeze agent containing propane-1,3-diol, ethanol, and water, wherein the mass ratio of propane-1,3-diol : ethanol : water is 35-45 : 12-16 : 40-50.

2. The anti-freeze agent according to claim 1, wherein the mass ratio of propane-1,3-diol : ethanol : water is 38-42 : 14-16 : 43-46.

3. The anti-freeze agent according to claim 1 or 2, which apart from ethanol and propane-1,3-diol does not contain further alcohols.

4. The anti-freeze agent according to one of the preceding claims, further containing at least one base, in particularly selected from NaOH, KOH, and amino alcohols and/or further containing at least one dicarboxylic acid, in particularly dodecane diacid, undecane diacid, adipic acid, succinic acid, or sebacic acid and/or further containing at least one monocarboxylic acid, in particularly octanoic acid, benzoic acid, para-tert-butyl benzoic acid, lauric acid, and myristic acid and/or further containing at least one corrosion inhibitor, in particularly at least one thiazole and/or at least one triazole.

5. The anti-freeze agent according to one of the preceding claims, further containing at least one defoaming agent.

6. The anti-freeze agent according to one of the preceding claims, further containing at least one hard water stabilizer, in particularly an acrylate-based terpolymer.

7. The anti-freeze agent according to one of the preceding claims containing:
propane-1,3-diol, ethanol, water, NaOH, triethanolamine, sebacic acid, octanoic acid, at least one triazole, one defoaming agent and one hard water stabilizer.

8. The anti-freeze agent according to one of claims 1 to 6 containing:
propane-1,3-diol, ethanol, water, 2-diethylaminoethanol and a non-proteinogenic amino acid.

9. The anti-freeze agent according to claim 1 consisting of:
propane-1,3-diol, ethanol, water, NaOH, triethanolamine, sebacic acid, octanoic acid, benzotriazole, a propylene oxide/ethylene oxide block polymer based defoaming agent and an acrylate-based terpolymer.

10. The anti-freeze agent according to claim 1 consisting of propane-1,3-diol, ethanol, water, 2-diethylaminoethanol and a non-proteinogenic amino acid.

## Revendications

1. Agent antigel contenant du propane-1,3-diol, de l'éthanol et de l'eau, dans lequel le rapport de masse entre le propane-1,3-diol:l'éthanol:l'eau est de 35-45:12-16:40-50.

2. Agent antigel selon la revendication 1, dans lequel le rapport de masse entre le propane-1,3-diol:l'éthanol:l'eau est de 38-42:14-16:43-46.

3. Agent antigel selon la revendication 1 ou 2, qui, en dehors de l'éthanol et du propane-1,3-diol, ne contient aucun autre alcool.

4. Agent antigel selon l'une quelconque des revendications précédentes, contenant en outre au moins une base, en particulier choisie parmi NaOH, KOH et des alcools d'amine et/ou contenant en outre au moins un acide dicarboxylique, en particulier un acide dodécanoïque, un acide undécanoïque, un acide adipique, un acide succinique ou acide sébacique et/ou contenant en outre au moins un acide monocarboxylique, en particulier un acide octano, un acide benzoïque, un acide p-tert-butyl-benzoïque, un acide laurique et un acide myristique et/ou contenant en outre au moins un agent de protection anticorrosion, en particulier au moins un thiazole et/ou au moins un triazole.

5. Agent antigel selon l'une quelconque des revendications précédentes, contenant en outre au moins un agent antimousse.

6. Agent antigel selon l'une quelconque des revendications précédentes, contenant en outre au moins un stabilisateur d'eau dure, en particulier un terpolymère à base d'acrylate.

7. Agent antigel selon l'une quelconque des revendications précédentes contenant :
du propane-1,3-diol, de l'éthanol, de l'eau, du NaOH, de la triéthanolamine, de l'acide sébacique, de l'acide octano, au moins un triazole, un agent antimousse et un stabilisateur d'eau dure.

8. Agent antigel selon l'une quelconque des revendications 1 à 6 contenant :
du propane-1,3-diol, de l'éthanol, de l'eau, du 2-diméthylaminoéthanol et un acide aminé non protéinogène.

9. Agent antigel selon la revendication 1 constitué de :
propane-1,3-diol, éthanol, eau, NaOH, triéthanolamine, acide sébacique, acide octano, benzotriazole, un agent antimousse à base d'oxyde de propylène/d'oxyde d'éthylène-polymère séquencé et un terpolymère à base d'acrylate.

10. Agent antigel selon la revendication 1 constitué de : propane-1,3-diol, éthanol, eau, 2-diméthylaminoéthanol et un acide aminé non protéinogène.
